# EUROPEAN PATENT APPLICATION

(11) **EP 0 978 970 A2**
(43) Date of publication of application: **09.02.2000**
(21) Application number: 99306060.7
(22) Date of filing: 30.07.1999
(51) Int. Cl.: H04L 25/08

(54) **Fault-tolerant differential receiver**

(30) Priority: 03.08.1998 US 128264
(71) Applicant: Ford Motor Company, Dearborn, MI 48126 (US)
(72) Inventor: Schreiber, Paul Thomas, Ypsilanti, Michigan 48197 (US)
(74) Representative: Messulam, Alec Moses

(57) **Abstract**

A two wire multiplex system with three receiver comparators (16,18,20) is disclosed that is completely tolerant to open wire faults as long as the other network wire is operating normally and un-faulted. The output of a differential comparator (20) of a three receiver multiplex wiring system assumes the active state when either network wire is in the active state in order to correctly detect active and passive states on the network wires under all fault conditions.

## Description

This invention relates to multiplex wiring systems and, more particularly, to a method and system of making a two wire multiplex system with three receiver comparators completely tolerant to multiple open wire faults as long as one wire is unfaulted.

Prior art multiplex wiring systems include a plurality of communication modules which are interconnected with a pair of wires or buses. Data is transmitted from any one of the modules on one of the wires while redundant inverted or complementary data is transmitted on the other wire. Each module includes three receiving channels, one channel for receiving data, one channel for receiving complementary data, and a differential channel for differentially combining the data and complementary data thereby reducing received noise. A predetermined data sequence is detected on each of the three channels such that specific types of system faults are indicated. In response to the fault indication, the most suitable of the three channels is selected to receive data. One such prior art system is disclosed in U.S. Patent No. 4,792,950 assigned to the assignee of the present invention, and incorporated herein by reference. Such wiring systems clamp the active (dominant) state of the network wires. Both network wires must be in an active state in order to produce an active state at the output of a differential comparator. The function of active-side clamps is to keep the signal at the comparator input from violating the common-mode voltage range of the differential comparator. However, a passive (recessive) state on either network wire forces the differential comparator output to the passive state.

A problem exists with this system in that open wire network faults may cause the differential comparator to receive non-complementary data. When multiple transmitters are sending data simultaneously, an active state may occur on only one wire because the open wire does not contain all of the simultaneous transmissions. When this happens, the data on the bus wires is not complementary. Specifically, one input to the comparator switches from passive to active while the other input stays passive. The switching input does not cross through the level of the passive signal and consequently the differential comparator output does not become active. This behaviour violates the concept of an active state always dominating a passive state even with non-complementary inputs. Certain arbitration protocols dictate that an active level should always dominate a passive level. Consequently, when the aforementioned fault occurs the differential comparator output should become active when an active state occurs on either input.

According to the present invention there is provided a two wire multiplex system comprising a plurality of modules interconnected by inverted and non-inverted data wires having passive and active states during communication between modules, each module including a differential comparator having a first input connected with said inverted data wire and a second input connected with said non-inverted data wire, and means for clamping the passive state of said wires.

Further, according to the present invention there is provided a method of correctly detecting an active state on either differential comparator input in a receiver module of a two-wire network in the presence of an open network fault on one of the network wires comprising the steps of: transmitting complementary data on said wires, clamping the passive state of said wires so that an active state on either line crosses the clamped state of the other wire producing an active state at the output of said differential comparator.

In contrast to the prior art, the present invention clamps the passive state of the network wires such that an active state on either network wire will cross the clamped state of the other network wire and result in an active state at the differential comparator output. Only a passive state on both network wires forces the differential comparator output to the passive state. This behaviour conforms to the concept of an active state dominating a passive state. With passive-side clamps, non-complementary data on the network wires in the presence of open network wire faults is correctly arbitrated. Any number of open circuits on one network wire is tolerated as long as the other network wire is operating normally and un-faulted. Passive-side clamps also keep the signal at the comparator input from violating the common-mode voltage range of the differential comparator.

The invention will now be described, by way of example, with reference to the accompanying drawings, in which:
Figure 1 shows an example of an open wire network fault;
Figure 2 shows the desired open network wire behaviour;
Figure 3 is a schematic of a prior art system with active-side clamp.
Figure 4 below shows the input and output waveforms of the differential comparator in the prior art system of Figure 3;
Figure 5 is a schematic of the present invention; and
Figure 6 shows the open network wire behaviour of the present invention.

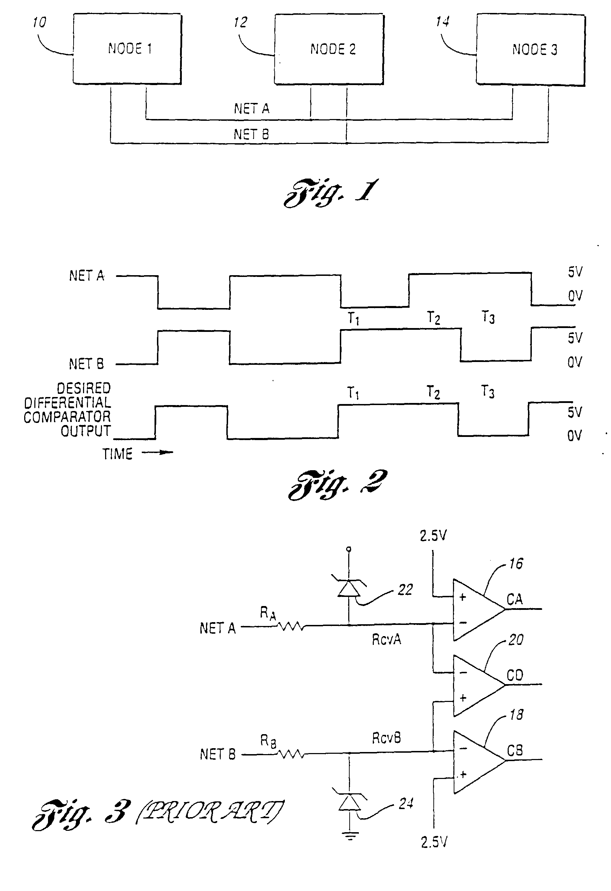

Referring now to the drawing and initially to Figure 1, a conventional two wire multiplex wiring system such as disclosed in the aforementioned patent comprises a plurality of communication modules or nodes, each including a transmitter and a receiver. Only three modules are shown and are designated 10, 12 and 14. The two information bus lines or wires interconnecting the nodes are designated NetA and NetB. The second bus line is provided for redundancy. Either one of the two bus lines may be used for both transmitting and receiving information between the modules. NetA carries data that is complementary to the data carried on NetB. It should be understood that the multiplex wiring system includes many other communication nodes that transmit and receive information from one another on NetA and NetB. Although not shown, each module is also coupled to input sources, such as accessory switches or automobile sensors and to output devices such as automobile accessories or displays. A common power bus is also provided in the multiplex wiring system.

As described in the aforementioned patent, a typical system in which the modules operate might be one in which the module 10 responds to actuation of a headlamp switch by generating an appropriate turn-on headlamp command on NetA and the complement thereof on NetB. Each module receives the data, however only the module, for example module 14, controlling the headlamps recognises the module address contained in the data, and initiates actuation of the headlamps. As described in greater detail in the aforementioned patent, in the event of the failure in one of the bus lines, a receiving module will select the other bus line. The system uses Pulse Width Modulation (PWM) encoding on the network bus. The voltage levels on the network are defined as either passive (undriven), or active (driven). For NetA wire the passive state is high (nominally +5 volts) and the active state is low (nominally ground). For NetB the passive state is low (nominally ground) and the active state is high (nominally +5 volts).

In Figure 1, one possibility for an open circuit condition is shown to exist between Nodes 1 and 2 on NetA. Both Nodes 1 and 2 may initiate transmission at the same time and Node 3 will receive both simultaneous transmissions on NetB but only the Node 2 transmission on NetA. At some point in the transmission, an active state will occur on NetB while a passive state will remain on NetA.

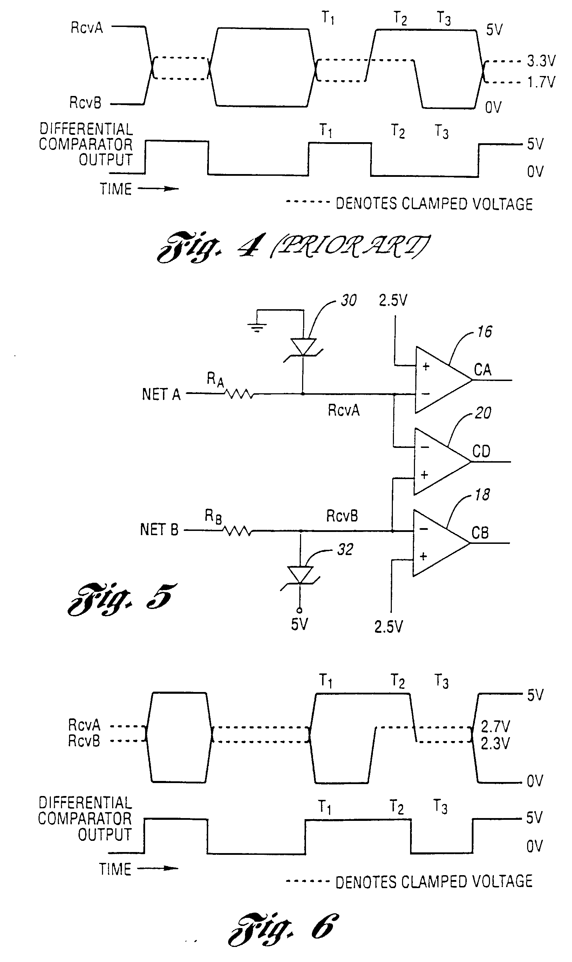

Figure 2 shows the desired behaviour for the differential comparator in the presence of an open wire fault on NetA. The NetA line is active when the signal is in the low state. The NetB line is active when the signal in the high state. In order for the active state to dominate the passive state, the active state on either network line must always result in an active state at the output of the differential comparator. At time T1, both NetA and NetB are in the active state and the differential comparator output is in the active state. At time T3, both NetA and NetB are passive, and the differential comparator output is in the passive state. At time T2, NetA is passive and NetB is active, and the differential comparator output remains in the active state. To successfully communicate with open network wire faults, the active state must always take precedence over the passive state. In other words, if either comparator input is active the differential comparator output must be active.

A prior art system employing active-side clamps is shown in Figure 3. A single-ended comparator 16 has its negative input connected through resistor R_{A} to NetA, and positive input connected to a reference voltage of approximately 2.5 volts which is the midpoint of the expected voltage excursion on NetA. A single-ended comparator 18 has its positive input connected through resistor R_{B} to NetB, and negative input connected to a reference voltage of approximately 2.5 volts which is the midpoint of the expected voltage excursion on NetB. A differential comparator 20 has its negative input connected through resistor R_{A} to NetA and its positive input connected through resistor R_{B} to NetB. The comparator inputs RcvA and RcvB are clamped in their active state by respective 3.3 volt Zener diode 22 and 24, or equivalent circuitry. Diode 22 clamps the voltage excursion on RcvA to a range of 5 volts to 1.7 volts. Similarly, diode 24 clamps the voltage excursion on RcvB to a range of zero volts to 3.3 volts. NetA and NetB preferably comprise a twisted wire pair, and carry complementary data. That is, NetA and NetB are differentially driven between zero volts and 5 volts. Active-side clamps follow the traditional approach of clamping a signal when it is being driven active and not clamping the signal when it is in the normally passive state. Thus, the diodes 22 and 24 conduct only when the input signal is in the active state.

Figure 4 shows the input and output waveforms of the prior art circuit of Figure 3. The active state is clamped as shown by the thick dotted lines.

**Table A**

| | RcvB | RcvA | Diff Comp Output |
|---|---|---|---|
| T₁ | 3.3V | 1.7V | 5V |
| T₂ | 3.3V | 5V | 0V |
| T₃ | 0V | 5V | 0V |

Table A lists the voltages at the inputs and output of the differential comparator 20 at times T1, T2 and T3. At time T1, an active state occurs on both network wires. This establishes 3.3 volts and 1.7 volts respectively at RcvA and RcvB and produces a 5 volt active state at the differential comparator output. At time T3, a passive state occurs on both network wires. This establishes 0 volts and 5 volts respectively at RcvA and RcvB and produces a 0 volt passive state at the differential comparator output. At time T2, a passive state occurs on RcvA and an active state occurs on RcvB. This establishes 5 volts and 3.3 volts respectively at the negative and positive inputs to comparator 20 and produces a 0 volt passive state at the differential comparator output. The passive differential comparator output at T2 in Figure 4 does not agree with the desired active output at T2 in Figure 2. Thus, the active side clamps do not ensure that the output of the differential comparator 20 is active if either input is active.

Referring now to Figure 5, the present invention is shown. Passive-side clamps follow the approach of clamping a signal only when it is resting in the passive state. The signals are unclamped in the active state. NetA and NetB are clamped through resistors R_{A} and R_{B} in their passive state by respective 2.7 volt Zener diodes 30 and 32, or equivalent circuitry. Diode 30 clamps the voltage excursion on RcvA to a range of 0 volts to 2.7 volts. Similarly, diode 32 clamps the voltage excursion on RcvB to a range of 5 volts to 2.3 volts.

Figure 6 shows the input and output waveforms of the differential comparator of the circuit of Figure 5. The passive state is clamped as shown by the thick dotted lines.

**Table B**

| | RcvB | RcvA | Diff Comp Output |
|---|---|---|---|
| T₁ | 5V | 0V | 5V |
| T₂ | 5V | 2.7V | 5V |
| T₃ | 2.3V | 2.7V | 0V |

Table B lists the voltages at the inputs and output of the differential comparator 20 at times T1, T2 and T3. At time T1, an active state occurs on both network wires. This establishes 5 volts and 0 volts respectively at RcvA and RcvB and produces a 5 volt active state at the differential comparator output. At time T3, both NetA and NetB are passive. This establishes 2.3 volts and 2.7 volts respectively at RcvA and RcvB and produces a 0 volt passive state at the differential comparator output. At time T2, a passive state occurs on NetA and an active state occurs on NetB. This establishes 5 volts and 2.7 volts, respectively, at RcvA and RcvB and produces a 5 volt active state at the differential comparator output. The active differential comparator output at T2 in Figure 6 agrees with the desired active output at T2 in Figure 2. Thus, the passive side clamps ensure that the output of the differential comparator 20 is active if either input is active regardless of wire faults.

## Claims

1. A two wire multiplex system comprising a plurality of modules (10,12,14) interconnected by inverted and non-inverted data wires having passive and active states during communication between modules, each module including a differential comparator (20) having a first input connected with said inverted data wire and a second input connected with said non-inverted data wire, and means (30,32) for clamping the passive state of said wires.

2. A system as claimed in Claim 1, wherein the means for clamping the passive state of said wires insures that an active state on either wire crosses the clamped state of the other wire forcing an active state at the output of said differential comparator.

3. A system as claimed in Claim 2, wherein said first input of said differential comparator is an inverting input and said second input is a non-inverting input.

4. A system as claimed in Claim 3, wherein the means for clamping the passive state of said wires forces the differential comparator output to the passive state only when a passive state is present on both wires.

5. A system as claimed in Claim 4, wherein the means for clamping the passive state of said wires comprises a first Zener diode having an anode connected with said non-inverting input and a cathode connected with a positive supply and a second Zener diode having a cathode connected to said inverting input and an anode connected with ground.

6. A system as claimed in Claim 5, wherein said supply is 5 volts and the clamping voltage of said diodes is 2.7 volts.

7. A two wire multiplex system comprising a plurality of communication modules each including a transmitter and a receiver, said module being interconnected by inverted and non-inverted data wires having passive and active states during communication between modules, the receiver of each module including a differential comparator having a negative input connected with said inverted data wire and a positive input connected with said non-inverted data wire, means for clamping the passive state of said wires including a first Zener diode having an anode connected with said positive input and a cathode connected with a positive supply and a second Zener diode having a cathode connected to said negative input and an anode connected with ground, whereby an active state on either wire crosses the clamped state of the other wire producing an active state at the output of said differential comparator and the differential comparator output is in a passive state only when a passive state is present on both wires.

8. A method of correctly detecting an active state on either differential comparator input in a receiver module of a two-wire network in the presence of an open network fault on one of the network wires comprising the steps of:
transmitting complementary data on said wires,
clamping the passive state of said wires so that an active state on either line crosses the clamped state of the other wire producing an active state at the output of said differential comparator.
